# EUROPEAN PATENT APPLICATION

(11) **EP 4 840 766 A1**
(43) Date of publication of application: **18.11.2026**
(21) Application number: 25305674.1
(22) Date of filing: 12.05.2025
(51) Int. Cl.: B64G 1/44, F24S 20/20

(54) **SPACE-BASED ORBITAL CONCENTRATED SOLAR AND BRAYTON TURBINE HIGH-POWER SPACECRAFT**

(71) Applicant: ROVIAL SAS, 31770 Colomiers (FR)
(72) Inventor: IRAVEDRA, Jesus, 28052 Madrid (ES); WEISSE, Nicolas, 93400 Saint Ouen sur Seine (FR); LECONTE, Sylvain, 31770 Colomiers (FR); KUMAR PANDEY, Amit, 31770 Colomiers (FR)
(74) Representative: Cabinet Beau de Loménie

(57) **Abstract**

A space-based solar thermal spacecraft positioned in a geostationary orbit generates electrical power using a closed Brayton cycle turbo-block system and concentrated solar thermal power. The spacecraft includes a concentrator (104) that has a field of mirrors (132) mounted on a large structure. These mirrors concentrate solar radiation to heat a gas in a receiver system, which then powers a closed Brayton cycle turbo-block system. The spacecraft significantly increases the amount of electrical power available in space, reducing the cost of power generation in the process.

## Description

### BACKGROUND

### Field of the Art

The present disclosure is related to the field of orbital solar power plants designed to convert the sun's radiation energy into electricity.

### Discussion of the State of the Art

The concept of harnessing solar power from space has been a long-standing vision within the scientific and technological communities. However, the realization of this vision has been persistently hindered by a number of technical and economic challenges. One of the primary obstacles has been the prohibitive cost and limited capacity of launching the required heavy spacecraft into space. Despite recent advancements in launch technology and the emergence of new players in the space industry, which have led to a significant reduction in launch costs and increased payload capacities, the dream of space-generated solar power remains elusive.

The advent of a new space economy, driven by the rapid development of artificial intelligence and robotics, has opened up exciting opportunities for space-based solar power spacecraft. Yet, these opportunities are tempered by the substantial technological challenges that still need to be overcome. These challenges stem from the low maturity of the required technologies, their large physical size, and the need to achieve a competitive price for the power produced.

In this emerging space economy, there is an urgent need for power generation methods that are not only more efficient and cost-effective than current methods, but also environmentally friendly. However, the use of photovoltaic (PV) solar panels, which are currently the primary method of power generation in space, is severely limited by issues of cost, technology, and scalability. Furthermore, the accommodation of these panels on spacecraft presents its own set of challenges.

Previous attempts to address these problems have been largely unsuccessful. For instance, the largest telecom spacecraft currently in operation generates only 20-25KW of power based on the state-of-the-art photovoltaic array technology. Moreover, there is only one object in space today that generates more than 100KW of power, and that object is the International Space Station (ISS). However, the ISS took a decade and more than 30 missions to assemble, and its operation is heavily dependent on human intervention. This clearly demonstrates the limitations of current space power generation methods and underscores the need for a more effective solution.

### SUMMARY

The present invention is a space-based solar thermal spacecraft situated in geostationary orbit (GEO). The spacecraft is designed to generate electrical power through a closed Brayton cycle turbo-block system and concentrated solar thermal power, thus providing an innovative solution to the challenges of power generation in space. The spacecraft in accordance with the present invention includes a solar concentrator having a field of mirrors mounted on a large structure, assembled by autonomous AI robots, to heat a gas that powers a closed Brayton cycle turbo-block system. The aim is to significantly increase the amount of electrical power available in space at a fraction of the current cost.

The spacecraft in accordance with the present invention overcomes the limitations of previous solutions by employing solar thermal technology to generate limitless, scalable, affordable, and sustainable electrical power in space. The power generated can be delivered through a variety of means and interfaces, providing a versatile solution to the power needs of the emerging space economy.

The spacecraft includes the solar concentrator, a high-power inflatable radiator, a modular solar receiver system, and a closed Brayton cycle turbo-block system. The closed Brayton cycle turbo-block system includes a compressor, a solar space turbine, electrical generator, and regenerating system. These components are integrated into a high-power spacecraft, which includes a high-power module, an avionic module, and payload modules. The net power output of the spacecraft ranges from 100 KWe to more than 500 KWe over a 15-year lifetime.

The spacecraft further includes an electrical generator, energy storage system, integrated solar control system, receiver removable thermal shield system, AI robots, and inflatable radiator. These elements ensure the efficient and reliable operation of the spacecraft, and contribute to the overall benefits of the spacecraft, which include increased power generation capacity, reduced costs, and the promotion of sustainable practices in space.

In one example, the present invention is a space-based solar thermal spacecraft that includes a solar concentrator having a plurality of mirrors that are configured to concentrate solar radiation. The plurality of mirrors may form a reflective surface having an area of 300 to 450 m². The spacecraft further includes a solar receiver system configured to absorb the concentrated solar radiation and convert the solar radiation into thermal energy. The solar receiver system may include a main receiver, an interheater receiver, heat transfer fluid, an outlet, a piping system coupled to the outlet, and absorber material. The main receiver and the interheater receiver may be closed volumetric receivers. The spacecraft further includes a closed Brayton cycle turbo-block system configured to be driven by a gas heated by the thermal energy. The closed Brayton cycle turbo-block system includes an electrical generator configured to convert mechanical energy into electrical energy. The closed Brayton cycle turbo-block system may include a compressor, a compressor drive turbine, a heat exchanger, an electrical generator, and a generator drive turbine. The solar receiver system may be coupled to the closed Brayton cycle turbo-block system through the piping system. The spacecrafte further includes a payload module, and an inflatable radiator configured to dissipate heat generated by operation of the spacecraft.

In another example, the present invention is a method for generating electrical power in space. The method includes the steps of: concentrating solar radiation using a solar concentrator; absorbing the concentrated solar radiation with a solar receiver system and converting the concentrated solar radiation into thermal energy; heating a gas with the thermal energy; driving a closed Brayton cycle turbo-block system with the heated gas; converting mechanical energy from the closed Brayton cycle turbo-block system into electrical energy with an electrical generator; storing the electrical energy in an energy storage system; and dissipating heat generated by the operation of the spacecraft with an inflatable radiator. The method may further include managing and optimizing the operation of the solar concentrator, the solar receiver system, and the closed Brayton cycle turbo-block system with an integrated solar control system. Still further, the method may include protecting the solar receiver system from excessive heat and radiation with a receiver removable thermal shield system. The receiver removable thermal shield system may be removable to expose the solar receiver system to solar radiation and replaceable to shield the solar receiver system from excessive heat and radiation.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
Fig. 1 illustrates a space-based orbital high-power spacecraft, in accordance with one embodiment of the present invention.
Fig. 2 is a schematic illustration of the thermodynamic cycle of a space-based orbital high-power spacecraft, in accordance with one embodiment of the present invention.
Figs. 3A-3D illustrate a solar concentrator of a space-based orbital high-power spacecraft, in accordance with one embodiment of the present invention.
Fig. 4 is a schematic illustration of a solar receiver, in accordance with one embodiment of the present invention.

### DETAILED DESCRIPTION

The present invention is for a space-based orbital high-power spacecraft, designed to efficiently harness solar energy in space for power generation through a combination of concentrated solar technology and the closed Brayton cycle turbo-block system. The invention is described by reference to various elements herein. It should be noted, however, that although the various elements of the inventive apparatus are described separately below, the elements need not necessarily be separate. The various embodiments may be interconnected and may be cut out of a singular block or mold. The variety of different ways of forming an inventive apparatus, in accordance with the disclosure herein, may be varied without departing from the scope of the invention.

Generally, one or more different embodiments may be described in the present application. Further, for one or more of the embodiments described herein, numerous alternative arrangements may be described; it should be appreciated that these are presented for illustrative purposes only and are not limited to the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements

Headings of sections provided in this patent application and the title of this patent application are for convenience only and are not to be taken as limiting the disclosure in any way.

Devices and parts that are connected to each other need not be in continuous connection with each other, unless expressly specified otherwise. In addition, devices and parts that are connected with each other may be connected directly or indirectly through one or more connection means or intermediaries.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

### Apparatus

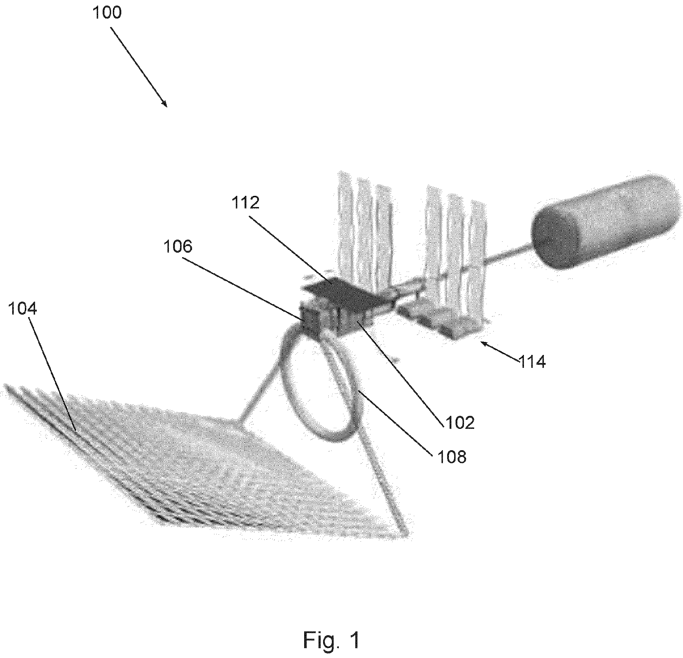

A space-based solar thermal spacecraft 100 in geostationary orbit (GEO), shown in Fig. 1, is designed to generate electrical power through a closed Brayton cycle turbo-block system 102 and concentrated solar thermal power. The spacecraft 100 includes a solar concentrator 104 having a plurality of reflective mirrors, a solar receiver system 106 to absorb and convert solar radiation into thermal energy, and a closed Brayton cycle turbo-block system 102 that utilizes the heated gas for power generation. The spacecraft 100 may also include an electrical generator for converting mechanical energy, an integrated solar control system to optimize operation, a receiver removable thermal shield system for protection, AI robots for assembly tasks, and an inflatable radiator 108 for heat dissipation. Also depicted in Fig. 1 are a solar panel 112, and a payload module 114. The spacecraft 100 can transmit energy to consumers via onboard payload modules 114 or through various transmission methods such as radio-frequency waves, infrared, or optical radiation for power beaming transfer. To ensure continuous electricity generation during eclipses, the spacecraft is equipped with an energy storage system based on either thermal energy storage or electrical batteries, allowing uninterrupted operation of the closed Brayton cycle turbo-block system 102.

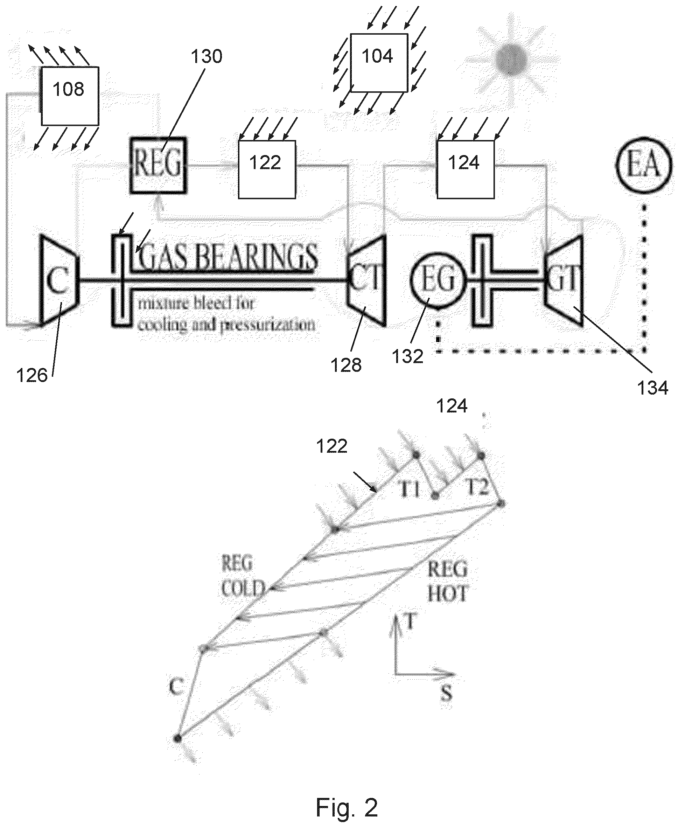

As shown in Fig. 2, the spacecraft 100 employs a regenerative scheme with one reheating, which divides the closed Brayton cycle turbo-block system 102 into two parts and utilizes a receiver system including a main receiver 122 and an interheater receiver 124 for reheating to increase cycle performance. By using a reheating scheme, the need for a large concentrator and radiator is reduced, enhancing efficiency without increasing spacecraft mass. The closed Brayton cycle turbo-block 102 includes a compressor 126, a compressor drive turbine 128, a heat exchanger (regenerator) 130, an electrical generator 132, and a generator drive turbine 134.

The solar concentrator 104 is used to focus the solar radiation into the main receiver 122 and the interheater receiver 124. From the main receiver 122, heated gas flows to the compressor drive turbine 128. From the compressor, the gas flows to the interheater receiver 124 for reheating. From the interheater receiver 124, the gas flows to the electrical generator 132 in order to generate electricity. The cooled gas then goes to the regenerator 130 to recover part of the heat, thereby increasing the performance of the thermal cycle and reducing the heat to be released by the radiator 108.

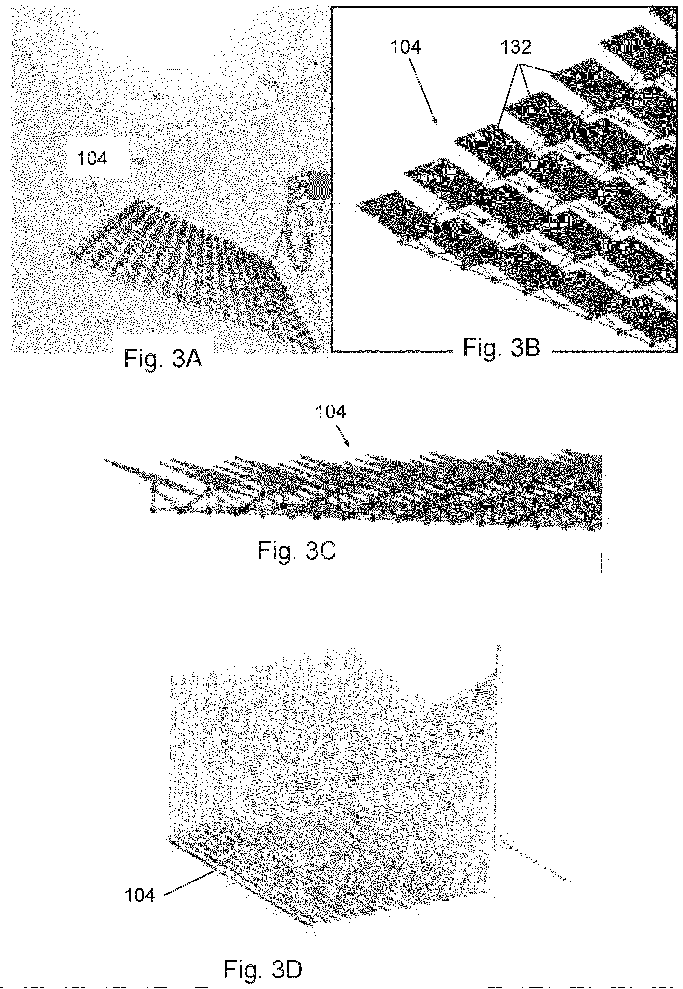

The solar radiation concentrator 104, shown in Figs. 3A-3D, includes a system of mirrors to collect and focus solar radiation into a solar receiver system 106. The system of mirrors is designed to operate in extraterrestrial conditions with solar irradiance levels between 1318 W/m² to 1420 W/m². The system of mirrors includes hundreds of individually tracking mirrors 132 as shown in fig. 3B. These mirrors 132 are specifically engineered to reflect sunlight into the stationary receiver system 106 located within the spacecraft structure.

The mirrors 132 are designed with a very small angular acceptance shape for the reflected image. This requires a specific tracking precision with an error distribution deviation in the order of 1 mrad to 4 mrad. The operation of the receiver system 106 typically necessitates that the incident flux density be maintained below a maximum value. Therefore, mirror images must be strategically placed on the receiver system 106 to achieve a homogeneous and workable solar flux distribution. This strategic placement extends the receiver material lifetime and minimizes optical interception losses.

The design of the concentrator 104 takes into account the mirror's position relative to the receiver system 106, and the redirection of sunlight by the concentrator 104. This involves a dedicated mirror shaping and special orientation of neighboring mirrors, the position and apparent shape of the sun, the geometry and optical errors of the mirrors, and the spacecraft operation strategy. Many of these optical losses associated with mirror shape are dynamic and have been simulated over a range of conditions to adequately characterize the likely performance of the space-based solar thermal spacecraft 100.

The concentrator of a space-based solar thermal 100kWe is based on a 300m² to 450m² reflective surface. The concentrator 104 focuses the solar power on the receiver 106, which acts as the heat source. The mirrors 132 collect solar power on a large surface and concentrate it on a small area within an aperture of the receiver system 106.

The structure of the concentrator 104 is a flat grid designed to maximize efficiency and avoid mirrors shading each other. Each mirror 132 has its own orientation mechanism to focus the power on the receiver system 106, which consequently, reaches an operating temperature between 1000°K and 1400°K. The mirrors 132 are specially designed for this concentrated solar application in space, optimizing the optical performance and minimizing the associated optical errors (beam and slope), for a 15 year mission lifetime under GEO/MEO orbital conditions.

The mirrors 132 of the concentrator 104 may be any type of mirror. For example, the mirrors 132 may be space-ready laminated thick solar glass (silvered glass thin mirrors), space-ready polymeric film with special radiation coatings (e.g., MgF₂, ZrO₂, TaO5, TiO₂, HFO₂, SiO₂), silver layer on sapphire or quartz sheet, diffusion barrier, thin metallic foil as substrate, or the like. The mirrors 132 may include high emittance coating to refrigerate the mirrors by thermal radiation.

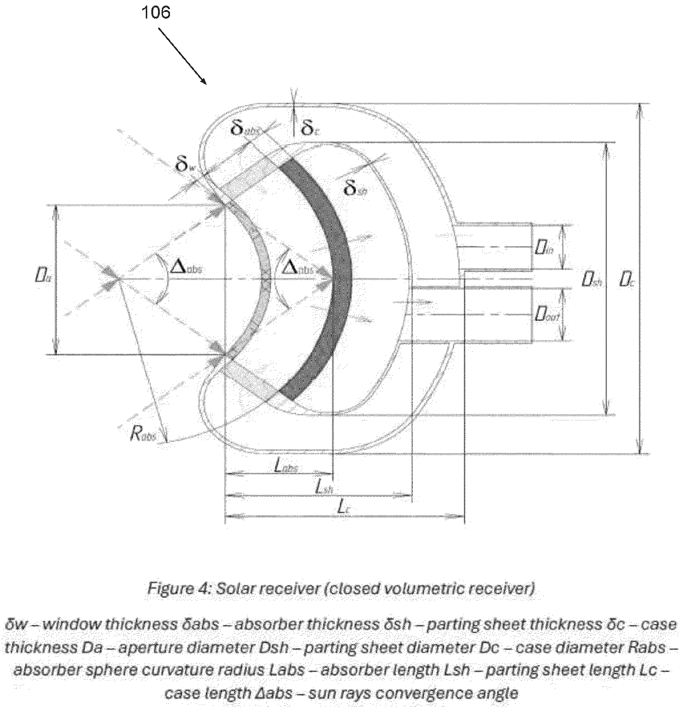

The solar receiver system 106, shown in Fig. 4, is designed to accommodate operational parameters such as temperature, pressure, turbine pressure drops, material temperature, lifespan, modularity, thermal performance, and radiation flux. The solar receiver system 106 is integrated within the spacecraft 100 and works in conjunction with the mirror system of the concentrator 104.

The receiver system 106 includes two similar units, which operate as a main receiver 122 and an interheater receiver 124 (shown in Fig. 2). The receiver system 106 thus provides thermal energy to the closed Brayton cycle turbo-block system's selected phase. For a 100 KW electric space-based solar thermal spacecraft, the thermal power required ranges from 180 KW to 250 KW for the main receiver 122, and 130 KW to 250 KW for the inter-heater receiver 124. The receivers 122, 124 may be closed volumetric receivers, which are preferable for their high concentration rate and the high temperatures achieved by the heat transfer fluid at the receiver outlet due to the volumetric effect.

The receiver system 106 includes a cylindrical structure, an optical window in the receiver's aperture for isolation from open space, a piping system for solar heat transfer, and an absorber material made up of porous interlocking shapes such as knit-wire packs, foam, honeycomb structures, packed beds, and others with defined porosity. The absorber material is positioned within the receiver system 106 to optimize the conversion of concentrated solar flux into thermal energy. The energy is absorbed in the depth of the 3D structure of the absorber material, thus heating up the absorber material. This volumetric effect increases the heat transfer area and ensures a uniform local flux density at the surface of the absorber material.

The selected heat transfer fluid (HTF), a binary mixture based on light He with Xe, Kr, Ar, Ne, or N₂, moves through the volume of the receiver system 106 as the solar energy is transferred from the absorber material to the HTF via forced convection.

After being heated within the receiver system 106, the thermal energy is transferred to the closed Brayton cycle turbo-block system 102 through the HTF. Here, the thermal gradient is used to transfer mechanical rotation power to the compressor's impeller and the electric generator's rotor.

An alternative to the closed volumetric receiver system design is a cylindrical tube receiver, which is a concept developed by NASA in the late 1980s. The cylindrical-tube receiver features a cavity lined axially with tubes for the heat transfer fluid. Solar energy enters the receiver through an aperture, heating the tube area irradiated by the solar flux. However, limitations related to temperature, thermal stress in tubes, thermal energy transmission performance, and re-irradiated energy have been identified with this design.

The closed Brayton cycle turbo-block system 102 is a mechanical device that transforms thermal power into mechanical power. This transformation is facilitated by a subcritical closed Brayton cycle turbo-block, which, as shown in Fig. 2, includes a compressor 126, a compressor drive turbine 128, a heat exchanger (regenerator) 130, an electrical generator 132, and a generator drive turbine 134. The heat exchanger 130 advantageously returns unconverted heat back into the cycle, thereby enhancing the overall efficiency of the turbine system. This increased efficiency, in turn, reduces the mass of the concentrator, receiver system, and radiator.

The closed Brayton cycle turbo-block system 102 operates in a steady state regime at its optimum point, due to the constant power received from the sun. This steady state regime also benefits the compressor, enhancing the reliability and lifespan of the system. The mechanical rotational energy produced by the system is converted into electricity by the electric generator. This generator, in conjunction with an alternator and transformer, provides a direct current voltage, typically ranging between 100 volts and 300 volts.

To facilitate the transfer of heat to the closed Brayton cycle turbo-block system 102, a dedicated piping system connects the receiver system 106 and the closed Brayton cycle turbo-block system 102. The working fluid, or heat transfer fluid, is a binary mixture based on light He with Xe, Kr, Ar, Ne, or N₂. This fluid is selected for its balanced mixture from the molecular mass and mechanical performance point of view.

The closed Brayton cycle turbo-block system 102 for space-based solar thermal spacecraft 100 is based on a closed subcritical Brayton gas turbine, which uses a regenerative scheme. This scheme allows for the transfer of the available temperature gradient due to excess thermal power to the cold compressed working fluid after the compressor 126. This transfer reduces the radiation power in open space and the heating power of the working fluid after the compressor 126.

The compressor 126 in this system is a single-stage centrifugal type with an open impeller. The turbines are a radial (centripetal) two-stage type, which allows for more intense heat removal from the blades to the disk through thermal conductivity processes. This design eliminates the need for active cooling.

The closed Brayton cycle turbo-block system 102 includes two independent units, one operating at 100% and the other on standby as a spare unit. The electrical generator 132 in this system is a brushless and gas-bearing generator with excitation from permanent magnets made of ferromagnetic alloys based on rare-earth elements.

To minimize mass and increase the reliability of the closed Brayton cycle turbo-block system 102, the turbine and generator 132 are based on a common housing with common supports. The electrical generator rotor and internal cavities are cooled by the heat transfer fluid (gas mixture), which also prevents the entry of hot gasses from the turbine.

Heat regeneration in the closed Brayton cycle turbo-block system 102 optimizes the required heating power in the solar receiver system 106 and heat rejection into space in the radiator 108. To optimize the compactness of the closed Brayton cycle turbo-block system 102, the regenerator 130 is designed based on a counterflow scheme.

The electrical generator 132 serves as the primary source of power during periods of sunlight. The generator 132 is designed to convert the thermal energy collected by the solar concentrator 104 and receiver 106 into electrical energy. This electrical energy is then used to power the spacecraft 100 and its various systems.

An energy storage system, typically composed of high-capacity electrical batteries, is included in the solar thermal spacecraft 100 to ensure continuous power supply during periods of solar eclipse when the primary heat source for the closed Brayton cycle turbo-block system 102 is absent. The batteries are charged by the electrical generator 132 during the solar phase of the orbit and discharged to provide power during the eclipse phase.

The spacecraft 100 further includes an integrated solar control system for managing the operation of the solar concentrator 104 and the electrical generator 132. The integrated solar control system ensures optimal performance of the solar concentrator 104 and manages the charging and discharging of the batteries, thereby maintaining a consistent power supply for the spacecraft 100.

The spacecraft 100 further includes a receiver removable thermal shield system to protect the receiver system 106 and its components from excessive heat and radiation. This shield can be removed or adjusted as needed to allow for the collection of solar energy.

The spacecraft 100 also includes AI robots, which are designed to perform various tasks such as maintenance, repairs, and adjustments of the apparatus components. These robots are programmed to operate autonomously, thereby reducing the need for human intervention.

Lastly, the solar thermal spacecraft 100 includes an inflatable radiator 108, which serves to dissipate excess heat generated by the spacecraft 100. This radiator 108 can be inflated or deflated as needed to regulate the temperature within the spacecraft 100.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false (or not present) and Bis true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A space-based solar thermal spacecraft (100), comprising:
a solar concentrator (104) comprising a plurality of mirrors (132), wherein the mirrors are configured to concentrate solar radiation;
a solar receiver system (106) configured to absorb the concentrated solar radiation and convert the solar radiation into thermal energy;
a closed Brayton cycle turbo-block system (102) configured to be driven by a gas heated by the thermal energy, wherein the closed Brayton cycle turbo-block system comprises an electrical generator (132) configured to convert mechanical energy into electrical energy;
a payload module (114); and
an inflatable radiator (108) configured to dissipate heat generated by operation of the spacecraft.

2. The space-based solar thermal spacecraft of claim 1, wherein the plurality of mirrors (132) form a reflective surface having an area of 300 to 450 m².

3. The space-based solar thermal spacecraft of claim 1, wherein the solar receiver system (106) comprises a main receiver (12), an interheater receiver (124), heat transfer fluid, an outlet, a piping system coupled to the outlet, and absorber material.

4. The space-based solar thermal spacecraft of claim 3, wherein the main receiver (12) and the interheater receiver (124) are closed volumetric receivers.

5. The space-based solar thermal spacecraft of any one of claims 1 to 4, wherein the closed Brayton cycle turbo-block system (102) comprises a compressor (126), a compressor drive turbine (128), a heat exchanger (130), an electrical generator (132), and a generator drive turbine (134).

6. The space-based solar thermal spacecraft of claim 3 taken in combination with any one of claims 1 to 5, wherein the solar receiver system (106) is coupled to the closed Brayton cycle turbo-block system (102) through the piping system.

7. A method for generating electrical power in space, comprising the steps of:
concentrating solar radiation using a solar concentrator (104);
absorbing the concentrated solar radiation with a solar receiver system (106) and converting the concentrated solar radiation into thermal energy;
heating a gas with the thermal energy;
driving a closed Brayton cycle turbo-block system (102) with the heated gas;
converting mechanical energy from the closed Brayton cycle turbo-block system into electrical energy with an electrical generator (132);
storing the electrical energy in an energy storage system; and
dissipating heat generated by the operation of the spacecraft with an inflatable radiator (108).

8. The method of claim 7, further comprising managing and optimizing the operation of the solar concentrator (104), the solar receiver system (106), and the closed Brayton cycle turbo-block system (102) with an integrated solar control system; and
protecting the solar receiver system from excessive heat and radiation with a receiver removable thermal shield system.

9. The method of claim 8, wherein the receiver removable thermal shield system is removable to expose the solar receiver system to solar radiation and replaceable to shield the solar receiver system from excessive heat and radiation.
